# EUROPÄISCHE PATENTSCHRIFT

(11) **EP 1 188 957 B1**
(45) Veröffentlichungstag und Bekanntmachung des Hinweises auf die Patenterteilung: **18.12.2002**
(21) Anmeldenummer: 00119967.8
(22) Anmeldetag: 14.09.2000
(51) Int. Cl.: F16H 57/05, F16H 61/00

(54) **Schmiereinrichtung für ein stufenlos verstellbares Umschlingungsgetriebe**
Lubrication system for continuously variable conical pulley transmission
Système de lubrification pour variateur continu de vitesse à poulies coniques

(43) Veröffentlichungstag der Anmeldung: 20.03.2002
(73) Patentinhaber: Ford Global Technologies, Inc., A subsidiary of Ford Motor Company, Dearborn, Michigan 48126 (US)
(72) Erfinder: Kohl, Ernst, 50968 Köln (DE)
(74) Vertreter: Drömer, Hans-Carsten, Dipl.-Ing.

(56) Entgegenhaltungen:
- EP-A- 0 574 085
- WO-A-98/20269
- DE-A- 19 614 226
- US-A- 4 612 003
- PATENT ABSTRACTS OF JAPAN vol. 010, no. 196 (M-497), 10. Juli 1986 (1986-07-10) & JP 61 041068 A (HONDA MOTOR CO LTD), 27. Februar 1986 (1986-02-27)

## Beschreibung

Die Erfindung bezieht sich auf eine Schmiereinrichtung für ein stufenlos in seiner Übersetzung verstellbares Umschlingungsgetriebe in Kraftfahrzeugen nach dem Oberbegriff des Anspruches 1.

Eine gattungsgemässe Schmiereinrichtung mit zumindest einem Flüssigkeitszuführungsröhrchen und zumindest zwei Ausströmöffnungen ist in der EP 0 574 085 beschrieben. Die beiden Ausströmöffnungen sind axial nebeneinander angeordnet und stellen so sicher, daß innerhalb eines bestimmten Bereiches um die Mitte des Kraftübertragungselementes herum für alle Positionen des Kraftübertragungselementes Kühl- oder Schmierflüssigkeit auf das besagte Kraftübertragungselement aufgebracht wird. Mit dieser Schmiereinrichtung wird vor allem das Kraftübertragungselement mit Schmiermittel beaufschlagt. Diese Schmiereinrichtung ist jedoch nicht geeignet, um gezielt die auf den Wellen beweglich angeordneten Riemenscheibenhälften in den veränderlichen Positionen zu schmieren.

Eine weitere gattungsgemässe Schmiereinrichtung ist in der WO 98 20 269 beschrieben, bei der zwei Ausströmöffnungen so angeordnet sind, daß die erste Ausströmöffnung in einer Ebene angeordnet ist, die der Mittelebene der ersten Riemenscheibe bei maximalem Abstand der beiden Riemenscheibenhälften entspricht, und daß die zweite Ausströmöffnung in einer Ebene angeordnet ist, die der Mittelebene der zweiten Riemenscheibe bei maximalem Abstand der beiden Riemenscheibenhälften entspricht. Auch hier sind die beiden Ausströmöffnungen fest angeordnet und eignen sich vorwiegend zum Schmieren des Kraftübertragungselementes.

Keine dieser Schmiervorrichtungen ist jedoch in der Lage, vor allem die in ihren Positionen veränderlichen Riemenscheibenhälften selber zu schmieren, was sich unter bestimmten Betriebszuständen als vorteilhaft herausgestellt hat.

Aufgabe der Erfindung ist es deshalb, eine Schmiereinrichtung zu schaffen, die auch bei wechselnder Stellung der beweglichen Riemenscheibenhälften eine optimale Versorgung mit Schmiermittel sowohl der Riemenscheibenhälften selber als auch des Kraftübertragungselementes erlauben.

Gelöst wird diese Aufgabe durch die Merkmale des Anspruches 1.

Im Schmierrohr ist ein Ventilrohr beweglich angeordnet, wobei sich beide Rohre relativ zueinander verschieben und/oder verdrehen können. Gesteuert wird diese Bewegung über den unterschiedlichen Schmierdruck, der sich entweder aus der Position der Riemenscheiben, über den Steuerdruck im Getriebe oder durch andere Massnahmen ergibt. Dabei ist unter Schmiermittel jede Flüssigkeit zu verstehen, die zur Schmierung und/oder Kühlung des Kraftübertragungselementes einschließlich der Riemenscheiben eingesetzt wird.

Das Ventilrohr ist gegenüber dem Schmierrohr so abgedichtet, daß Schmiermittel nur austreten kann, wenn die im Ventilrohr angebrachten Ventilöffnungen mit den im Schmierrohr angebrachten Spritzöffnungen korrespondieren. Durch die gezielte Anordnung von Ventilöffnungen und Spritzöffnungen können für die verschiedenen radialen und axialen Stellungen des Ventilrohres im Schmierrohr verschiedene Spritzmuster erzeugt werden. Dabei kann die Ventilöffnung auch im Spritzrohr angebracht sein, so daß eine Spritzöffnung im Ventilrohr bei entsprechender Stellung des Schmierrohres freigegeben wird. Damit kann, wenn sich das Ventilrohr relativ zum Schmierrohr bzw. Getriebegehäuse bewegt, erreicht werden, daß der Schmiermittelstrahl kontinuierlich mit der Riemenscheibe mitwandert.

Für die genaue axiale Positionierung von Ventilrohr und Schmierrohr zueinander weist das Schmierrohr einen Ruheanschlag und einen Endanschlag auf, womit die maximale axiale Bewegung von Schmierrohr und Ventilrohr zueinander begrenzt ist. Vorzugsweise ist dabei die axiale Bewegung nicht größer als die Bewegung, die die bewegliche Riemenscheibenhälfte auf der Welle vorführt. Eine relative radiale Bewegung von Schmierrohr und Ventilrohr zueinander kann gezielt erreicht werden, indem eine Drehkulissensteuerung zwischen Schmierrohr und Ventilrohr angeordnet ist, so daß die relative axiale Bewegung in eine zusätzliche Drehbewegung zwischen Schmierrohr und Ventilrohr mündet. Wird diese Drehbewegung zur Anpassung der Schmiermittelstrahlen nicht benötigt, kann die Drehbewegung auch durch entsprechende Vorrichtungen und Massnahmen unterbunden werden.

Eine vorteilhafte Ausgestaltung der Erfindung sieht vor, daß zwischen Ventilrohr und Schmierrohr eine Feder angeordnet ist, die Schmierrohr und Ventilrohr am Ruheanschlag gegeneinander drückt. Erst wenn der Schmierdruck die Federkraft überschreitet, bewegen sich Ventilrohr und Schmierrohr gegeneinander auf den Endanschlag zu.

Eine weitere Ausgestaltung der Erfindung sieht vor, daß mindestens eine Spritzöffnung im Spritzrohr und mindestens eine längliche Ventilöffnung im Ventilrohr derart korrespondieren, daß für einen Teil oder für alle Positionen des Ventilrohres zwischen Ruheanschlag und Endanschlag die Spritzöffnung für das Schmiermittel offen ist. Damit wird erreicht, daß unabhängig von der relativen Stellung von Ventilrohr und Spritzrohr die besagte Spritzöffnung bzw. Spritzöffnungen immer offen sind. Anwendung findet diese Anordnung, wenn unabhängig von der relativen Stellung von Ventilrohr und Spritzrohr die Spritzöffnung immer ein Schmiermittelstrahl bereitstellen soll. Dies ist z.B. der Fall, wenn das Schmierrohr fest zum Getriebegehäuse angeordnet ist und unabhängig von der Stellung des Ventilrohres im Schmierrohr die Spritzöffnung immer auf einen bestimmten, ortsfesten Bereich zielen soll. Eine solche Anordnung ist auch anwendbar, wenn das Ventilrohr fest am Getriebegehäuse angeordnet ist und das Schmierrohr beweglich zum Getriebegehäuse angeordnet ist, um z.B. der Verstellung der beweglichen Riemenscheibenhälften mit dem Schmiermittelstrahl folgen zu können.

Entsprechend umgekehrt ist eine weitere Ausführung, bei der mindestens eine Spritzöffnung im Ventilrohr und mindestens eine längliche Ventilöffnung im Schmierrohr derart korrespondieren, daß für einen Teil oder für alle Positionen des Ventilrohres zwischen Ruheanschlag und Endanschlag die Spritzöffnung für das Schmiermittel offen ist. Dies findet Anwendung, wenn das Schmierrohr zum Getriebegehäuse feststeht und die Spritzöffnung im Ventilrohr einen beweglichen Teil im Getriebe folgen soll. Andersherum, wenn das Ventilrohr fest zum Getriebegehäuse steht, kann damit ein ortsfester Schmiermittelstrahl erzeugt werden.

Eine weitere vorteilhafte Ausgestaltung der Erfindung sieht vor, daß zwei Spritzöffnungen im Spritzrohr und eine Ventilöffnung im Ventilrohr derart korrespondieren, dass, wenn das Ventilrohr am Ruheanschlag anliegt, die eine Spritzöffnung durch die Ventilöffnung geöffnet ist und wenn das Ventilrohr am Endanschlag anliegt, die zweite Spritzöffnung durch die Ventilöffnung geöffnet ist, während die erste Spritzöffnung geschlossen ist. Eine solche Anordnung findet Anwendung, wenn in Ruheposition die erste Spritzöffnung einen Schmiermittelstrahl bereitstellen soll und in Endposition die zweite Spritzöffnung einen Schmiermittelstrahl bereitstellen soll.

Eine weitere Ausgestaltung sieht vor, daß eine Spritzöffnung im Spritzrohr durch eine Ventilöffnung geöffnet wird, wenn das Ventilrohr sich in einer Position zwischen Ruheanschlag und Endanschlag befindet. Damit wird eine Staffelung des Schmiermittelstrahles erreicht, d.h., auch in Mittelposition von Ventilrohr und Schmierrohr zwischen Endanschlag und Ruheanschlag, kann ein Schmiermittelstrahl erzeugt werden.

Vorzugsweise dient die Schmiervorrichtung dazu, das Schmiermittel auf die vom Kraftübertragungselement beaufschlagten kegelförmigen Laufflächen beider Riemenscheibenhälften einer Riemenscheibe zu spritzen. Dabei ist es notwendig, den Schmiermittelstrahl auf den Laufflächen möglichst nahe der Riemenscheibennabe aufzubringen. Während dies bei der feststehenden Riemenscheibenhälfte leicht erreicht werden kann durch eine feststehende Spritzöffnung, die entsprechend ausgerichtet ist, ist im Fall der beweglichen Riemenscheibenhälfte die Spritzöffnung an die Bewegung der Riemenscheibenhälfte anzupassen. Dies kann zum einen erfolgen, indem abwechselnd mehrere Spritzöffnungen durch Ventilöffnungen geöffnet werden, je nach Stellung des Ventilrohres zum Schmierrohr. Oder es wird eine bewegliche Spritzöffnung benutzt, welche im relativ zum Getriebegehäuse beweglich angeordneten Rohr, entweder dem Spritzrohr oder dem Ventilrohr, angebracht ist. Durch die entsprechende Kombination von Spritzöffnungen und länglichen Ventilöffnungen, sowohl-auf dem Schmierrohr als auch auf dem Ventilrohr, können mit einer erfindungsgemäßen Schmiervorrichtung bei beiden Riemenscheiben die Laufflächen der beiden Riemenscheibenhälften einer Riemenscheibe mit Schmiermittel beaufschlagt werden.

Wahlweise kann das Schmiermittel mit der erfindungsgemäßen Schmiervorrichtung auch an eine oder mehrere Stellen direkt auf das Kraftübertragungselement gespritzt werden. Durch entsprechende Anordnung mehrerer Spritzöffnungen können auch eine oder beide Riemenscheiben und das Kraftübertragungselement mit derselben Schmiervorrichtung mit Schmiermittel versorgt werden.

Weitere vorteilhafte Ausgestaltungen der Erfindung sind den folgenden Zeichnungen zu entnehmen. Es zeigen:
- Fig. 1a, b: die Draufsicht einer Schmiereinrichtung mit Riemenscheiben;
- Fig. 2: die Seitenansicht einer Schmiereinrichtung mit Riemenscheiben;
- Fig. 3: einen Querschnitt durch eine Schmiereinrichtung;
- Fig.4a,b: einen Längsschnitt durch eine Schmiereinrichtung im Ruheanschlag und im Endanschlag; und
- Fig.5: einen Längsschnitt durch eine Schmiereinrichtung mit Längsöffnungen im Schmierrohr.

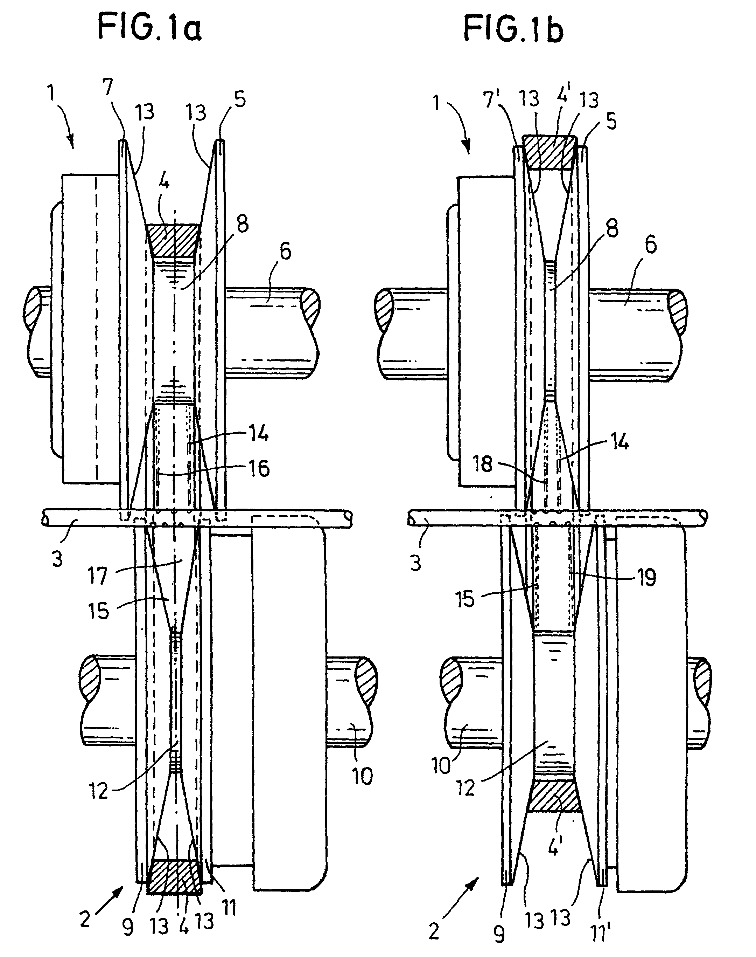

In Fig. 1a ist die Draufsicht auf eine Schmiereinrichtung gezeigt. Zwischen der ersten Riemenscheibe 1 und der zweiten Riemenscheibe 2 ist das Schmierrohr 3 angeordnet. Mittels des Kraftübertragungselementes 4 stehen die Riemenscheiben 1 und 2 in getrieblicher Verbindung. Die erste Riemenscheibe 1 weist die feststehende Riemenscheibenhälfte 5, die auf einer ersten Welle 6 axial verschiebbaren Riemenscheibenhälfte 7 und die zwischen den beiden Riemenscheibenhälften angeordnete Riemenscheibennabe 8 auf. Entsprechend weist die zweite Riemenscheibe 2 die feststehende Riemenscheibe 9, die auf einer zweiten Welle 10 axial verschiebbaren Riemenscheibenhälfte 11 und die zwischen beiden Riemenscheibenhälften angeordnete Riemenscheibennabe 12 auf. Alle Riemenscheibenhälften weisen kegelförmige Laufflächen 13 auf, die vom Kraftübertragungselement 4 beaufschlagt sind.

Dargestellt sind in Fig. 1a für die beiden beweglichen Riemenscheibenhälften 7 und 11 das niedrigste Übersetzungsverhältnis. Das heisst: die Riemenscheiben 5 und 7 der ersten Riemenscheibe 1 weisen den grössten Abstand auf, während die beiden Riemenscheibenhälften 9 und 11 der zweiten Riemenscheibe 2 den geringsten Abstand aufweisen.

In Fig. 1b ist das höchste Übersetzungsverhältnis gezeigt, bei dem bei der ersten Riemenscheibe 1 die beiden Riemenscheibenhälften 5 und 7' den geringsten Abstand aufweisen, und bei der zweiten Riemenscheibe 2 die Riemenscheibenhälften 9 und 11' den größten Abstand aufweisen. Das Kraftübertragungselement 4' ist jetzt entsprechend der Übersetzungsänderung in axialer Richtung der Wellen 6 und 10 verschoben.

Zur Sicherstellung der Schmierung des Kraftübertragungsmittels 4 und der Riemenscheiben 1 und 2 weist das Schmierrohr 3 Spritzöffnungen auf, durch die mehrere Schmierstrahlen austreten. Vorteilhaft treffen die Schmierstrahlen möglichst nahe im Bereich der Riemenscheibennaben 8 und 12 auf die Laufflächen 13 der Riemenscheibenhälften auf. Im Falle der feststehenden Riemenscheibenhälften 5 und 9 wird dies bewerkstelligt vom Schmierstrahl 14 für die erste Riemenscheibe 1 und vom Schmierstrahl 15 für die zweite Riemenscheibe 2. Diese beiden Schmierstrahlen werden ständig aufrechterhalten, unabhängig von der Stellung der beweglichen Riemenscheibenhälften 7 und 11.

Damit auch die beiden beweglichen Riemenscheibenhälften 7 und 11 jeweils möglichst im Bereich der Riemenscheibennaben 8 und 12 geschmiert werden, müssen die Schmiermittelstrahlen mit den Riemenscheibenhälften wandern. Im niedrigsten Übersetzungsverhältnis wird die bewegliche Riemenscheibenhälfte 7 der ersten Riemenscheibe 1 vom Schmiermittelstrahl 16 beaufschlagt, während die beweglichen Riemenscheibenhälfte 11 der zweiten Riemenscheibe 2 vom Schmiermittelstrahl 17 beaufschlagt wird.

Verändert sich das Übersetzungsverhältnis zum grösstmöglichen Übersetzungsverhältnis hin, werden die beiden beweglichen Riemenscheibenhälften 7' und 11' durch die beiden Schmiermittelstrahlen 18 und 19 möglichst nahe im Bereich der Riemenscheibennaben 8 und 12 beaufschlagt. Die Schmiermittelstrahlen 18 und 19 werden dadurch erzeugt, daß in der Stellung des höchsten Übersetzungsverhältnisses andere Spritzöffnungen im Schmierrohr geöffnet sind als in der Stellung des niedrigsten Übersetzungsverhältnisses, wo die beiden Schmiermittelstrahlen 16 und 17 geöffnet waren.

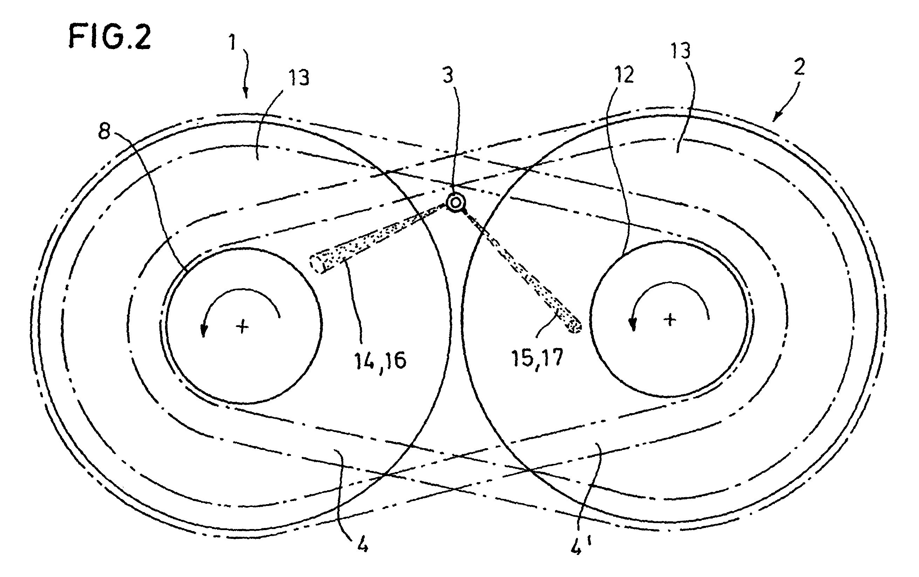

Die Seitenansicht der Schmiereinrichtung mit den beiden Riemenscheiben 1 und 2 und dem Schmierrohr 3 zeigt Fig. 2. Schematisch dargestellt sind die beiden Extremstellungen des Kraftübertragungselementes 4, 4': Im niedrigsten Übersetzungsverhältnis befindet sich Kraftübertragungselement 4, im höchsten Übersetzungsverhältnis Kraftübertragungselement 4'. Gezeigt sind die Schmiermittelstrahlen 14, 15 der feststehenden Riemenscheibenhälften 5, 9 und die Schmiermittelstrahlen 16, 17 der beweglichen Riemenscheibenhälften 7, 11 wo sie auf die Laufflächen 13 treffen. Dargestellt ist dabei das niedrigste Übersetzungsverhältnis. Sobald sich die beweglichen Riemenscheibenhälften 7, 11 auf den Wellen verschieben, wandert auch der Auftreffpunkt der Schmierstrahlen 16, 17 auf den Laufflächen 13 radial nach aussen bzw, nach innen auf die Riemenscheibennabe hin bis zu dem Punkt, an dem das Ventilrohr auf andere Spritzöffnungen umschaltet.

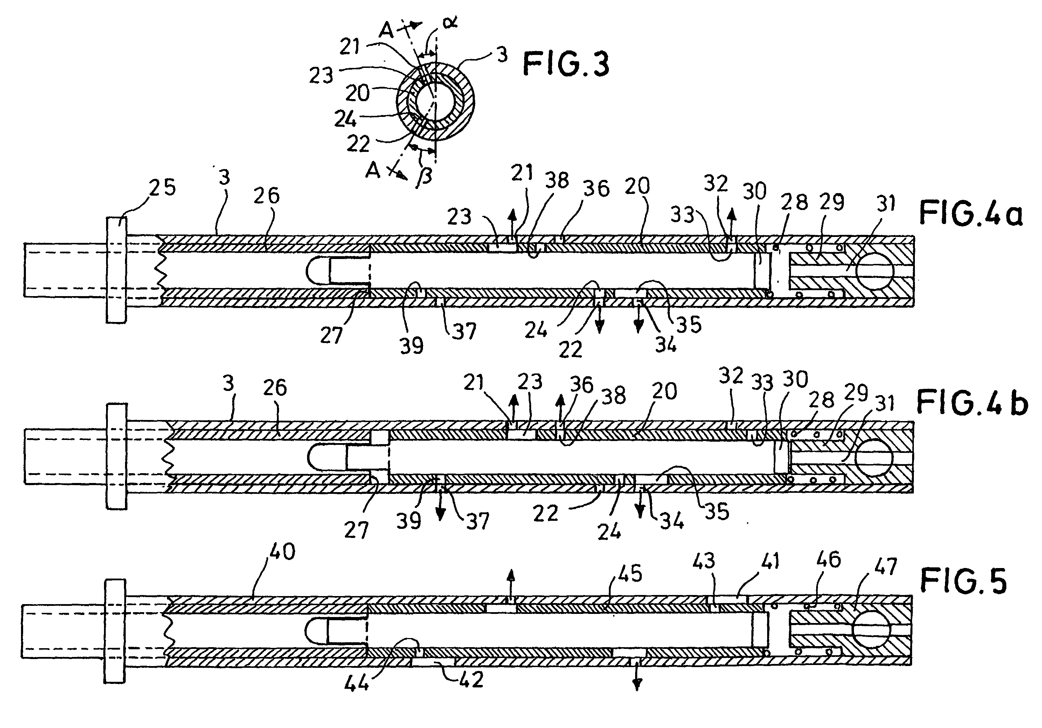

Fig. 3 zeigten einen Querschnitt durch das Schmierrohr 3 mit dem innenliegenden Ventilrohr 27. Im Spritzrohr 3 sind die Spritzöffnungen 21 und 22 angeordnet, im Ventilrohr die beiden Ventilöffnungen 23 und 24. Aus zeichnerischen Gründen sind alle vier Öffnungen in einer Ebene dargestellt.

Fig. 4 a zeigt einen Längsschnitt durch die Schmiereinrichtung entlang der Schnittkante A-A aus Fig. 3. Das Schmierrohr 3 weist einen Anschraubflansch 25 auf, mittels dem es am nicht dargestellten Getriebegehäuse befestigt ist. Ein Schmierstoffrohr 26, das im Schmierrohr 3 angeordnet ist, bildet gleichzeitig den Ruheanschlag 27 für das Ventilrohr 20, das beweglich im Schmierrohr 3 angeordnet ist. Gegen den Ruheanschlag 27 wird das Ventilrohr 20 durch die Druckfeder 28 gedrückt. Die Feder 28 stützt sich am Endanschlag 29 ab, der fest mit dem Schmierrohr 3 verbunden ist. Das Ventilrohr ist auf der Seite des Endanschlages 29 mit einem Ventilstopfen 30 dicht abgeschlossen, während der Endanschlag 29 eine Entlüftungsbohrung 31 zum Austritt von Leckageöl aufweist.

Wird Schmiermittel durch das Schmiermittelrohr 26 in die Schmiervorrichtung eingebracht, füllt es zunächst das Ventilrohr 20 aus. Im Ruhezustand ist dabei der Anpressdruck der Druckfeder 28 so gross, daß das Ventilröhrchen in der Stellung am Ruheanschlag 27 verbleibt. Entsprechend der Anordnung von Spritzöffnungen im Schmierrohr 3 und Ventilöffnungen im Ventilrohr 20 sind folgende Spritzöffnungen geöffnet: Die Spritzöffnung 21 durch die längliche Ventilöffnung 23, die Spritzöffnung 32 durch die Ventilöffnung 33, die Spritzöffnung 22 durch die Ventilöffnung 24 und die Spritzöffnung 34 durch die längliche Ventilöffnung 35. Die Spritzöffnungen 36 und 37 sind geschlossen, die korrespondierenden Ventilöffnungen 38 und 39 befinden sich in einer anderen Stellung.

Steigt der Schmierdruck des Schmiermittels soweit an, daß das mit dem Ventilstopfen 30 geschlossene Ventilrohr 20 den Anpressdruck der Druckfeder 28 überwindet, wird das Ventilrohr 20 in Richtung des Endanschlages 29 geschoben, wie in Bild 4 b dargestellt. Jetzt sind die Spritzöffnungen 36 und 37 im Schmierrohr 3 durch die Ventilöffnungen 38 und 39 geöffnet, während die Spritzöffnungen 22 und 32 geschlossen sind, da die korrespondierenden Ventilöffnungen 33 und 34 sich in einer anderen Stellung befinden. Die beiden Spritzöffnungen 21 und-34 sind nach wie vor geöffnet, da die länglichen Ventilöffnungen 23 und 35 unabhängig von der Stellung des Ventilrohres 20 die beiden Spritzöffnungen offen halten.

Abhängig vom Schmierdruck kann somit die Anzahl der Schmiermittelstrahlen über die Stellung des Ventilrohres festgelegt werden. Da das Übersetzungsverhältnis der beiden Riemenscheiben zueinander über einen Steuerdruck gesteuert wird, kann mittels einer geeigneten Anpassung des Schmierdruckes an diesen Steuerdruck entsprechend auch die Stellung des Ventilrohres abhängig vom Steuerdruck und damit abhängig von der Stellung der Riemenscheiben gesteuert werden.

Eine weitere Ausführungsform für die Schmiereinrichtung zeigt Fig. 5. Das Schmierrohr 40 weist dazu die länglichen Ventilöffnungen 41 und 42 auf, die mit den Spritzöffnungen 43 und 44 im Ventilrohr 45 korrespondieren. Wenn jetzt der Schmierdruck im Ventilrohr 45 erhöht wird, arbeitet das Ventilrohr gegen die Druckfeder 46 und bewegt sich gegen den Endanschlag 47. Die aus dem steigenden Schmierdruck resultierende kontinuierliche Verschiebung des Ventilrohres 45 entspricht der kontinuierlichen Verstellung der beweglichen Riemenscheibenhälften 7 und 11 bei steigendem Steuerdruck. Die resultierenden Schmiermittelstrahlen der Spritzöffnungen 43 und 44 bewegen sich dann mit den beweglichen Riemenscheibenhälften mit, und eine sichere Schmiermittelversorgung des Kraftübertragungselementes 4 bei jeder Riemenscheibenstellung ist somit gewährleistet.

## Patentansprüche

1. Schmiereinrichtung für ein stufenlos in seiner Übersetzung verstellbares Umschlingungsgetriebe in Kraftfahrzeugen, wobei des Umschlingungsgetriebe zwei Riemenscheiben (1, 2) aufweist, die über ein Kraftübertragungselement (4; 4') in Form eines Endlosbandes in getrieblicher Wirkverbindung stehen, eine Riemenscheibe (1) zwei Riemenscheibenhälften (5, 7) aufweist, von denen eine axial stationär und die andere axial verschiebbar auf einer Welle (6) angeordnet ist, bei Übersetzungsänderungen der Abstand der Riemenscheibenhälften einer Riemenscheibe kleiner oder größer und der Abstand der Riemenscheibenhälften der anderen Riemenscheibe entsprechend entgegengesetzt größer oder kleiner wird, die Schmiervorrichtung ein zwischen den Riemenscheiben anbringbares Schmierrohr (3) aufweist, in welchem das unter einem Schmierdruck stehende Schmiermittel zugeführt wird, und im Schmierrohr angeordnete Spritzöffnungen die aus ihnen austretenden Schmiermittelstrahlen auf die zu schmierenden und kühlenden Bereiche lenken,
**dadurch gekennzeichnet, dass**
ein Ventilrohr (20) beweglich im Schmierrohr (3) angeordnet ist, wobei sich das Ventilrohr bei wechselndem Schmierdruck relativ zum Schmierrohr verschiebt und/oder verdreht, und im Ventilrohr Ventilöffnungen (23, 24, 33, 35, 38, 39) angebracht sind, die je nach axialer und radialer Stellung des Ventilrohres zum Schmierrohr jeweils verschiedene Spritzöffnungen (21, 22, 32, 36, 37) im Schmierrohr für das Schmiermittel öffnen.

2. Schmiereinrichtung nach Anspruch 1,
**dadurch gekennzeichnet, daß**
im Schmierrohr Ventilöffnungen angebracht sind, die je nach axialer und radialer Stellung des Ventilrohres zum Schmierrohr jeweils verschiedene Spritzöffnungen im Ventilrohr für das Schmiermittel öffnen.

3. Schmiereinrichtung nach Anspruch 1 oder 2,
**dadurch gekennzeichnet, daß**
die axiale Bewegung des Ventilrohres zum Schmierrohr durch einen Ruheanschlag (27) und einen Endanschlag (29) begrenzt ist.

4. Schmiereinrichtung nach Anspruch 3,
**dadurch gekennzeichnet, daß** zwischen Ventilrohr und Schmierrohr eine Feder (28) angeordnet ist, die Schmierrohr und Ventilrohr am Ruheanschlag gegeneinander drückt.

5. Schmiereinrichtung nach Anspruch 3,
**dadurch gekennzeichnet, daß**
mindestens eine Spritzöffnung im Schmierrohr und mindestens eine längliche Ventilöffnung im Ventilrohr derart korrespondieren, daß für einen Teil oder für alle Positionen des Ventilrohres zwischen Ruheanschlag und Endanschlag die Spritzöffnung für das Schmiermittel offen ist.

6. Schmiereinrichtung nach Anspruch 3,
**dadurch gekennzeichnet, daß**
mindestens eine Spritzöffnung im Ventilrohr und mindestens eine längliche Ventilöffnung im Schmierrohr derart korrespondieren, daß für einen Teil oder für alle Positionen des Ventilrohres zwischen Ruheanschlag und Endanschlag die Spritzöffnung für das Schmiermittel offen ist.

7. Schmiereinrichtung nach Anspruch 3,
**dadurch gekennzeichnet, daß**
mindestens zwei Spritzöffnung im Schmierrohr und mindestens eine Ventilöffnung im Ventilrohr derart korrespondieren, daß wenn das Ventilrohr am Ruheanschlag anliegt, die eine oder mehrere erste Spritzöffnungen durch die eine oder mehrere Ventilöffnung geöffnet sind, und wenn das Ventilrohr am Endanschlag anliegt, die eine oder mehrere zweiten Spritzöffnungen durch die eine oder mehrere Ventilöffnungen geöffnet sind.

8. Schmiereinrichtung nach Anspruch 3,
**dadurch gekennzeichnet, daß**
eine oder mehrere Spritzöffnungen im Schmierrohr durch eine oder mehrere Ventilöffnungen geöffnet werden, wenn das Ventilrohr sich in einer Position zwischen Ruheanschlag und Endanschlag befindet.

9. Schmiereinrichtung nach Anspruch 1 oder 2,
**dadurch gekennzeichnet, daß**
eine Drehkulissensteuerung zwischen Schmierrohr und Ventilrohr angeordnet ist, die eine relative axiale Bewegung zwischen Schmierrohr und Ventilrohr in eine zusätzliche Drehbewegung zwischen Schmierrohr und Ventilrohr umwandelt.

10. Schmiereinrichtung nach Anspruch 1 oder 2,
**dadurch gekennzeichnet, daß**
das Schmierrohr fest mit einem Getriebegehäuse verbunden ist.

11. Schmiereinrichtung nach Anspruch 1 oder 2,
**dadurch gekennzeichnet, daß**
das Ventilrohr fest mit einem Getriebegehäuse verbunden ist.

12. Schmiereinrichtung nach Anspruch 1 oder 2,
**dadurch gekennzeichnet, daß**
das Schmiermittel auf die vom Kraftübertragungselement beaufschlagten inneren Flanken (13) beider Riemenscheibenhälften einer Riemenscheibe gespritzt wird.

13. Schmiereinrichtung nach Anspruch 12,
**dadurch gekennzeichnet, daß**
beide Riemenscheiben mit einem Schmiermittel beaufschlagt sind.

14. Schmiereinrichtung nach Anspruch 1 oder 2,
**dadurch gekennzeichnet, daß**
das Schmiermittel an einer oder mehreren Stellen direkt auf das Kraftübertragungselement gespritzt wird.

15. Schmiereinrichtung nach Anspruch 12 oder 13 und 14,
**dadurch gekennzeichnet, daß**
das Schmiermittel auf eine oder beide Reibscheiben und auf das Kraftübertragungselement aufgebracht wird.

## Claims

1. Lubricating device for a wrap-around transmission of continuously variable transmission ratio in motor vehicles, the wrap-around transmission having two belt pulleys (1, 2) which are operatively connected in transmission via a force transmission element (4, 4') in the form of an endless band, one belt pulley (1) having two belt-pulley halves (5, 7), of which one is arranged in an axially stationary manner and the other in an axially displaceable manner on a shaft (6), in the event of changes in transmission ratio the spacing of the belt-pulley halves of one belt pulley becoming smaller or larger and the spacing of the belt-pulley halves of the other belt pulley becoming larger or smaller correspondingly in the opposite direction, the lubricating device having a lubricating tube (3) which is capable of being mounted between the belt pulleys and in which the lubricant is supplied under a lubricating pressure, and spray orifices arranged in the lubricating tube guiding the lubricant jets emerging from them onto the regions to be lubricated and cooled, **characterized in that** a valve tube (20) is arranged movably in the lubricating tube (3), the valve tube being displaced and/or rotated relative to the lubricating tube in the event of a changing lubricating pressure, and the valve tube having formed in it valve orifices (23, 24, 33, 35, 38, 39) which, depending on the axial and radial position of the valve tube in relation to the lubricating tube, in each case open various spray orifices (21, 22, 32, 36, 37) in the lubricating tube for the lubricant.

2. Lubricating device according to Claim 1, **characterized in that** the lubricating tube has formed in it valve orifices which, depending on the axial and radial position of the valve tube in relation to the lubricating tube, in each case open various spray orifices in the valve tube for the lubricant.

3. Lubricating device according to Claim 1 or 2, **characterized in that** the axial movement of the valve tube in relation to the lubricating tube is limited by a rest stop (27) and an end stop (29).

4. Lubricating device according to Claim 3, **characterized in that**, between the valve tube and the lubricating tube, a spring (28) is arranged, which presses the lubricating tube and the valve tube against one another at the rest stop.

5. Lubricating device according to Claim 3, **characterized in that** at least one spray orifice in the lubricating tube and at least one elongate valve orifice in the valve tube correspond in such a way that the spray orifice is open for the lubricant in some or all of the positions of the valve tube between the rest stop and the end stop.

6. Lubricating device according to Claim 3, **characterized in that** at least one spray orifice in the valve tube and at least one elongate valve orifice in the lubricating tube correspond in such a way that the spray orifice is open for the lubricant in some or all of the positions of the valve tube between the rest stop and the end stop.

7. Lubricating device according to Claim 3, **characterized in that** at least two spray orifices in the lubricating tube and at least one valve orifice in the valve tube correspond in such a way that, when the valve tube comes to bear on the rest stop, one or more first spray orifices are opened by means of one or more valve orifices, and, when the valve tube comes to bear on the end stop, one or more second spray orifices are opened by means of one or more valve orifices.

8. Lubricating device according to Claim 3, **characterized in that** one or more spray orifices in the lubricating tube are opened by means of one or more valve orifices when the valve tube is in a position between the rest stop and the end stop.

9. Lubricating device according to Claim 1 or 2, **characterized in that** between the lubricating tube and the valve tube is arranged a rotary slotted-link control which converts a relative axial movement between the lubricating tube and the valve tube into an additional rotational movement between the lubricating tube and the valve tube.

10. Lubricating device according to Claim 1 or 2, **characterized in that** the lubricating tube is connected firmly to a transmission case.

11. Lubricating device according to Claim 1 or 2, **characterized in that** the valve tube is connected firmly to a transmission case.

12. Lubricating device according to Claim 1 or 2, **characterized in that** the lubricant is sprayed onto those inner flanks (13) of the two belt-pulley halves of a belt pulley upon which the force transmission element acts.

13. Lubricating device according to Claim 12, **characterized in that** both belt pulleys are acted upon by a lubricant.

14. Lubricating device according to Claim 1 or 2, **characterized in that** the lubricant is sprayed directly onto the force transmission element at one or more points.

15. Lubricating device according to Claim 12 or 13 and 14, **characterized in that** the lubricant is applied to one or both friction discs and to the force transmission element.

## Revendications

1. Système de lubrification pour variateur continu de vitesse à poulies coniques dans des véhicules automobiles, dans lequel le variateur de vitesse à poulies coniques présente deux poulies à courroie (1, 2) qui sont en liaison coopérante fonctionnelle par le biais d'un élément de transfert de force (4, 4') sous forme d'une bande sans fin, une poulie à courroie (1) présente deux moitiés de poulie à courroie (5, 7) dont une est stationnaire axialement et l'autre est déplaçable axialement sur un arbre (6), lors de variations du rapport de transmission, la distance des moitiés de poulie à courroie d'une poulie à courroie devenant plus petite ou plus grande et la distance des moitiés de poulie à courroie de l'autre poulie à courroie devenant inversement plus grande ou plus petite de manière correspondante, le système de lubrification présente un tube de lubrification (3) pouvant être monté entre les poulies à courroie, dans lequel le lubrifiant sous pression de lubrification est amené, et des ouvertures d'injection disposées dans le tube de lubrification guidant les jets de lubrifiant qui en sortent sur les parties à lubrifier et à refroidir,
**caractérisé en ce que**
un tube de soupape (20) est mobile dans le tube de lubrification (3), le tube de soupape se déplaçant et/ou tournant par rapport au tube de lubrification lors d'une alternance de la pression de lubrification, et des ouvertures de soupape (23, 24, 33, 35, 38, 39) étant prévues dans le tube de soupape, lesquelles ouvrent à chaque fois des ouvertures d'injection différentes (21, 22, 32, 36, 37) dans le tube de lubrification pour le lubrifiant, en fonction de la position axiale et radiale du tube de soupape par rapport au tube de lubrification.

2. Système de lubrification selon la revendication 1,
**caractérisé en ce que**
des ouvertures de soupape sont prévues dans le tube de lubrification, lesquelles ouvrent à chaque fois des ouvertures d'injection différentes dans le tube de soupape pour le lubrifiant en fonction de la position axiale et radiale du tube de soupape par rapport au tube de lubrification.

3. Système de lubrification selon la revendication 1 ou 2,
**caractérisé en ce que**
le mouvement axial du tube de soupape par rapport au tube de lubrification est limité par une butée de repos (27) et une butée de fin de course (29).

4. Système de lubrification selon la revendication 3,
**caractérisé en ce que**
un ressort (28) est disposé entre le tube de soupape et le tube de lubrification, et presse le tube de lubrification et le tube de soupape contre la butée de repos.

5. Système de lubrification selon la revendication 3,
**caractérisé en ce que**
au moins une ouverture d'injection dans le tube de lubrification et au moins une ouverture de soupape longitudinale dans le tube de soupape correspondent de telle sorte que pour une partie ou pour toutes les positions du tube de soupape entre la butée de repos et la butée de fin de course, l'ouverture d'injection pour le lubrifiant soit ouverte.

6. Système de lubrification selon la revendication 3,
**caractérisé en ce que**
au moins une ouverture d'injection dans le tube de soupape et au moins une ouverture de soupape longitudinale dans le tube de lubrification correspondent de telle sorte que pour une partie ou pour toutes les positions du tube de soupape entre la butée de repos et la butée de fin de course, l'ouverture d'injection pour le lubrifiant soit ouverte.

7. Système de lubrification selon la revendication 3,
**caractérisé en ce que**
au moins deux ouvertures d'injection dans le tube de lubrification et au moins une ouverture de soupape dans le tube de soupape correspondent de telle sorte que lorsque le tube de soupape est en appui contre la butée de repos, l'une ou plusieurs des premières ouvertures d'injection sont ouvertes par l'une ou plusieurs des ouvertures de soupape, et lorsque le tube de soupape est en appui contre la butée de fin de course, l'une ou plusieurs deuxièmes ouvertures d'injection sont ouvertes par l'une ou plusieurs des ouvertures de soupape.

8. Système de lubrification selon la revendication 3,
**caractérisé en ce que**
une ou plusieurs ouvertures d'injection dans le tube de lubrification sont ouvertes par une ou plusieurs ouvertures de soupape, lorsque le tube de soupape se trouve dans une position entre la butée de repos et la butée de fin de course.

9. Système de lubrification selon la revendication 1 ou 2,
**caractérisé en ce que**
une commande à coulisse rotative est disposée entre le tube de lubrification et le tube de soupape, laquelle convertit un mouvement axial relatif entre le tube de lubrification et le tube de soupape en un mouvement de rotation supplémentaire entre le tube de lubrification et le tube de soupape.

10. Système de lubrification selon la revendication 1 ou 2,
**caractérisé en ce que**
le tube de lubrification est fermement connecté à une boîte de transmission.

11. Système de lubrification selon la revendication 1 ou 2,
**caractérisé en ce que**
le tube de soupape est fermement connecté à une boîte de transmission.

12. Système de lubrification selon la revendication 1 ou 2,
**caractérisé en ce que**
le lubrifiant est injecté sur les flancs internes (13) de deux moitiés de poulies à courroie d'une poulie à courroie, qui sont sollicités par l'élément de transfert de force.

13. Système de lubrification selon la revendication 12,
**caractérisé en ce que**
les deux poulies à courroie sont frappées par un lubrifiant.

14. Système de lubrification selon la revendication 1 ou 2,
**caractérisé en ce que**
le lubrifiant est injecté en un ou plusieurs endroits directement sur l'élément de transfert de force.

15. Système de lubrification selon la revendication 12 ou 13 ou 14,
**caractérisé en ce que**
le lubrifiant est appliqué sur un ou les deux plateaux de friction et sur l'élément de transfert de force.
